# EUROPEAN PATENT APPLICATION

(11) **EP 4 390 342 A1**
(43) Date of publication of application: **26.06.2024**
(21) Application number: 22216552.4
(22) Date of filing: 23.12.2022
(51) Int. Cl.: G01J 3/28, G01J 3/02, G01J 3/10

(54) **ILLUMINATION-INDUCED MULTISPECTRAL IMAGING SYSTEM, A METHOD FOR ACQUIRING A MULTISPECTRAL IMAGE AND A MULTISPECTRAL ILLUMINATION DEVICE**

(71) Applicant: CSEM Centre Suisse d'Electronique et de Microtechnique SA - Recherche et Développement, 2002 Neuchâtel (CH)
(72) Inventor: Didier, Marie, 1005 Lausanne (CH); Blanc, Sébastien, 1007 Lausanne (CH)
(74) Representative: P&TS SA (AG, Ltd.)

(57) **Abstract**

The invention relates to an illumination-induced multispectral imaging system comprising a digital handheld camera; an illumination device integrated to or mountable on the digital handheld camera, the illumination device comprising a plurality of LEDs wherein each LED is configured to emit light within a single spectral band, said single spectral band being characterized by a central wavelength comprised between 400 nm and 1500 nm, wherein said plurality of LEDs is arranged to emit light in at least two different non-overlapping spectral bands; the imaging system further comprising a control unit configured to sequentially activate the LEDs such that only one spectral band is emitted at a time, wherein the control unit is further adapted to sequentially activate the LEDs during a sequence of image acquisitions by the digital handheld camera, wherein the acquisition of each image is synchronized with the sequential activation of the LEDs, such that each image is acquired during an emission period of only one spectral band.

The invention further relates to a method for the acquisition of a multispectral image using an illumination-induced multispectral imaging system and to a multispectral illumination device.

## Description

### Technical domain

The present invention concerns an illumination-induced multispectral imaging system and a method for acquiring a multispectral image using the illumination-induced multispectral imaging system. The present invention also concerns a multispectral illumination device for mounting on a digital handheld camera arranged with a camera lens.

### Related art

Multispectral imaging technology is an emerging technology that organically combines traditional two-dimensional imaging technology and spectral technology to obtain data cubes. Multispectral imaging technology has been used for a variety of applications, ranging from geological and agricultural surveying, over military surveillance and industrial evaluation to documents and artworks. For example, satellite multispectral imaging has been used in mineral exploration, environmental monitoring, and military surveillance.

In traditional multispectral imaging, sample objects are illuminated with a continuos-spectrum source, e.g. a halogen lamp, and different color filters are used sequentially in combination with a camera to acquire images of the sample objects corresponding to different regions of the spectrum. In contrast, the illumination-induced multispectral imaging technique uses independent narrow-spectrum light sources to illuminate the sample object only within a defined spectral window and acquire, for each spectral window, a corresponding image of the sample object.

Illumination-induced multispectral imaging uses, for instance, light-emitting diodes (LED) as primary light sources. It has received much attention in recent years, especially in the field of the assessment of cultural property of artistic and museum interest, due to its robustness and the availability of high-intensity LEDs with a narrow band of wavelengths ranging from near-infrared through the visible spectrum and into the ultraviolet range.

For a typical illumination-induced multispectral imaging system, such as disclosed in WO0246710A1, a set *s* of different LEDs is chosen, whereby the different LEDs emit light within a different narrow band of wavelengths. Said light can be reflected by a sample object to be assessed. The different LEDs are illuminated in a sequence, and an optical detector records images under the illuminated LEDs one at a time, therefore producing multispectral images containing the reflectance spectra of the sample object to be assessed. The recorded images can be stored and further processed with imaging processing software to obtain further details of the sample object to be assessed. Spatial and spectral information coming both from the multispectral image and pixel-wise calibrated extraction of intensity can now be possible. For the sake of conciseness, the sample object to be assessed and/or object to be imaged is referred to as the sample object, of which an assessment of the reflected light can be conducted to identify the materials or to determine the properties of the materials used.

Illumination-induced multispectral imaging systems known from the prior art, which were used for the assessment of objects of museum interest have in common that they are heavy, costly, complex in their structure, and need to be operated by specifically trained users to obtain reasonable assessment results. The complexity of the multispectral imaging systems from the prior art hinders their transportation for in-situ assessment of objects of museum interest. This can be particularly problematic when said objects consist in valuable, unique items which should also not be transported. There can be thus a need for a portable and reliable multispectral imaging system adapted to the analysis of objects of museum interest, such as paintings, documents, manuscripts, banknotes, textiles, frescos, pigmented ceramics or statues.

At the same time, most of said imaging systems known from the prior art are unsuitable for assessing underlying chemical properties or extracting the intrinsic reflectance of materials of unknown composition pixel-wise, without the need for external auxiliary lights nor filters on the camera lens or sensor.

### Short disclosure of the invention

An object of the present invention is the provision of an illumination-induced multispectral imaging system that overcomes the shortcomings and limitations of the state of the art.

According to a first aspect of the present invention, an illumination-induced multispectral imaging system is disclosed, involving the features recited in claim 1. Further features and embodiments of the illumination-induced multispectral imaging system of the present invention are described in the dependent claims.

The invention relates to the illumination-induced multispectral imaging system comprising:
- a digital handheld camera;
- an illumination device, integrated to or mountable on the digital handheld camera; and
- a control unit.

The illumination device comprises a plurality of LEDs for illuminating a sample object, wherein each LED of the plurality of LEDs is configured to emit light within a single spectral band, said single spectral band being characterized by a central wavelength comprised between 400 nm and 1500 nm, wherein said plurality of LEDs can be arranged to emit light in at least two different non-overlapping spectral bands;

The control unit is configured to sequentially activate the LEDs of the at least two different non-overlapping spectral bands, such that only one spectral band is emitted at a time, the control unit being further adapted to sequentially activate the LEDs of the at least two different non-overlapping spectral bands during a sequence of image acquisitions by the digital handheld camera , wherein the acquisition of each image is synchronized with the sequential activation of the LEDs of the at least two different non-overlapping spectral bands, such that each image is acquired by the digital handheld camera during an emission period of only one spectral band.

Some spectral bands may have some degree of overlap. However, the overlapping of all spectral bands is excluded in this context, as the claimed imaging system wouldn't be anymore a "multispectral" imaging system.

The illumination-induced multispectral imaging system of the invention allows to obtain precise assessment results of a sample object. Moreover, it provides the advantage of being compact and portable simultaneously, whereby non-specifically trained users can operate it.

In one embodiment, the single spectral bands of the LEDs present advantageously a spectral bandwidth narrower than 30 nm, preferably narrower than 20 nm. This embodiment allows to better reconstruct the reflectance spectra for each image pixel.In this context, the spectral bandwidth refers to the width of the spectral band emitted by each LED at half of their maximum intensity, conventionally known as "full width at half maximum" or FWHM.

In the course of the present disclosure, the phrase "being configured to emit light" (or any variation thereof) can be a synonym for being configured to emit light when energized. The term light can refer to electromagnetic radiation emitable by the LEDs comprising electromagnetic radiation which can be visible. However, the term can also be interpreted broadly in the present disclosure and can refer to electromagnetic radiation of any wavelength, whether visible or not, to humans. Illumination device and multispectral illumination device can be exchangeable in the course of the present disclosure.

Handheld cameras typically refer to cameras with a weight of less than 5kg (including the lens attached to the handheld camera), preferably less than 2kg. However, the term "handheld" does not exclude that the digital handheld camera can be mounted on a tripod, a monopod, or a gimbal. "Integrated" can refer to the fact that the illumination device can be a part of the digital camera, whereas "mountable" can mean that the illumination device can be attached to and removed from the digital handheld camera.

The emission period can refer to the time or duration in which the LED or plurality of LEDs emits a specific spectral band. Activating can be used as a different term for energizing, whereas deactivating can refer to the contrary, namely interrupting the provision of energy for energizing or activating.

Image acquisition can determine the process of capturing a digital image using a digital handheld camera. For example, the digital handheld camera can be used in combination with a lens, a shutter, and an image sensor to acquire a digital image of the sample object. The resulting image can then be stored, edited, or shared using various software and hardware tools.

The control unit can be external to the handheld camera and/or to the illumination device. The control unit can be configured as a programmable device, such as a microcontroller, a field programmable gate array, or a digital signal processor. Alternatively, the control unit can be a pre-programmed electronic device.

Most preferably, the control unit can be a part of the illumination device. The control unit can comprise LED drivers coupled to the plurality of LEDs, to supply the LEDs with the required current for illumination. The current supplied to the plurality of LEDs can be a DC current or a pulsed current, whereby the latter provides the advantage of being more energy efficient. The control unit can be connected to a power supply and a communication bus or cable, to communicate with devices external to the illumination device, such as the digital handheld camera.

In one embodiment, the illumination device is configured to emit light with a defined polarization state, and the digital handheld camera can be provided with a polarizing filter, wherein the polarizing filter can be adapted for preventing, at least partially, light having the same polarization state as the light emitted by the illumination device, from entering the camera lens. It will be noticed that it is not mandatory that all the emitted light has the same defined polarization state. For some wavelengths the emitted light may even be unpolarized. The use of polarization filtering may be advantageous for some wavelengths while not being necessary for other wavelengths in the same multispectral imaging application. For example, visible light could be unpolarized, whereas infrared light, used to observe subjacent drawings of a painting below the visible pigments, could be advantageously polarized, such as to remove by polarization filtering the direct reflection of the infrared light from the visible pigments.

In one embodiment, the polarizing filter is mounted to a camera lens of the digital handheld camera. In another embodiment, the polarizing filter is not necessarly mounted to a camera lens: for example and in a non-limitig way, it could be an arrangement of liquid crystal filters just in front of a camera sensor.

Depending on the type of sample object and its surface state or configuration, the direct reflection of light from the illumination device towards the camera lens may be detrimental to the quality of the multispectral information obtainable from said object.

One advantageous way to avoid this problem can be to use an illumination device emitting light with a defined polarization state and providing the camera with a filter, for instance a polarizing filter, to block at least partially any incoming light (=entering the camera lens) having the same polarization state as the light emitted or emittable by the illumination device. The defined polarisation state can refer to any polarization state of the light, other than non-polarised light, which can enable some form of polarisation-based filtering. The term "defined" can also be referred to as "predetermined".

The polarization state of the light emitted by the illumination device can be for example, linearly polarized or circularly polarized light.

The simplest realization of this technique can be the emission of linearly polarised light from the illumination device and the use of a linear polarization filter on the camera lens, oriented close to 90° with respect to the polarisation axis of the emitted light.

It may be convenient to adjust the orientation of the polarizing filter, such as to block only partially the incoming light having the same axis of polarization as emitted or emittable by the illumination device, for instance, at an angle between 70° and 89°.

In order to obtain a linear polarization of the light emitted by the illumination device, there can be several alternatives. For example, a polarization filter can be integrated into the housing of the illumination device or placed externally. Alternatively, individual polarization filters can be provided in front of each, or some of the LEDs. Other possibilities can include the use of LEDs producing linearly polarized light. In the latter example, the LEDs must be carefully oriented when installed in the illumination device. Further embodiments based on different defined polarisation states, such as circularly polarized light, may be conceived as well.

In another embodiment of the first aspect of the invention, the LEDs of the illumination device can be configured to emit light in at least three different non-overlapping spectral bands, including at least one spectral band in the range from 360nm to 599nm, another spectral band in the range from 600nm to 799nm and another spectral band in the range from 800nm to 1500nm.

The illumination-induced multispectral imaging system can be used to assess inter alia, artwork. In this scenario of use, the illumination-induced multispectral imaging system may be used to reveal subjacent drawings, the presence of one specific pigment, or other multispectral information from the sample object, but not necessarily requiring precise chemical identification of a large number of different pigments. This may be sufficient to work with a few spectral bands, for example, one band covering the near UV to orange light (360nm to 599nm), another spectral band for the red and very near infrared (600nm to 799nm), and another spectral band in the near-infrared from 800nm to 1500nm.

In another embodiment of the first aspect of the invention, the LEDs of the illumination device can be configured to emit light in at least twelve mutually different spectral bands, wherein said twelve different spectral bands can comprise or preferably can be centered at the following twelve wavelengths: 415 nm, 435 nm, 500 nm, 550 nm, 605 nm, 630 nm, 700 nm, 770 nm, 850 nm, 880 nm, 910 nm, and 950 nm.

This embodiment of a multispectral illumination device, based on the defined at least twelve different spectral bands, enables the illumination-induced multispectral imaging system to discriminate with high accuracy among 70 reflectance spectra corresponing to standard historical pigments.

In a further embodiment of the first aspect of the invention, each LED of the plurality of LEDs of the illumination device can be provided having a power drainage of less than 500 mW.

In a further embodiment of the first aspect of the invention, the control unit can be configured to activate the LEDs of the at least two different non-overlapping spectral bands selectively, for a time period of less than 500 milliseconds.

The LEDs used for the illumination device can also be of a low current high-brightness type or any variation thereof. The luminous flux emitable by each individual LED can be higher than 15lm. However, the luminous flux (or radiant flux) can be selected not to damage the sample object. This selection can be advantageous for paintings, where the used pigments shall not fade due to the illumination with the use of the illumination device, or can be beneficial for any other material sensitive to high irradiance. This advantage comes in concert with the short illumination time, as set out before. In summary, the sample object is preserved from potential damage due to exposure to intense light, as it has been the case in the past with multispectral imaging based on continuous spectrum illumination.

On the other hand, selecting LEDs with a low current and thus low power drainage can be energy saving, which can be in particular advantageous when the illumination-induced multispectral imaging system is exclusively battery powered.

In a different embodiment of the first aspect of the invention, the illumination device can further comprise a continuous-spectrum white light source, wherein the continuous-spectrum white light source preferably can comprise one or more continuous-spectrum LEDs configured to emit white light.

Besides the illumination-induced multispectral imaging capability, it can be convenient to provide the illumination-induced multispectral imaging system with a light source of white continuous - spectrum. The light source can be used in several manners, including but not limited to:
- As a temporary light source to allow the adjustment of the digital handheld camera settings (auto-focus, aperture, etc.) when working in relatively dark conditions.
- As a source of broad spectral illumination for acquiring one image with information relative to all (or many of) the wavelengths of the individual LEDs, which can be used in a post-processing step as a reference for a precise relative alignment of the individual images of the multispectral image. This is particularly advantageous for handheld operation of the device, since during the sequence of multispectral acquisitions it can be expected that the position of the camera may slightly change.
- As a source of broad spectral illumination for acquiring a standard (visible) color image representative of the sample object by the multispectral imaging system. Such an image can be better adapted for recognizing said object when used, for example, as a thumbnail of the digital file containing the multispectral image.

In another embodiment of the first aspect of the invention, the illumination device can further comprise:
a housing configured with two parts and a centrally disposed through-hole, extending from a first part to a second part of the housing, and a fixture integrally connected with the housing for attaching the housing to a lens of the digital handheld camera, the fixture can be adapted to mount the centrally disposed through-hole in alignment with said lens, wherein one of the two parts of the housing can be transparent and configured to be transmissive to the illumination of the LEDs, wherein the LEDs can be arranged inside the housing in groups, wherein each group can be arranged to emit light in a mutually different spectral band.

In a further embodiment of the first aspect of the invention, the digital handheld camera can comprise an infrared cut-off filter-less CMOS image sensor. In conventional consumer digital handheld cameras nowadays, an infrared filter (also called IR cut-off filter) is usually placed atop the image sensor. The IR cut-off filter is typically used to block IR light from reaching the pixels of the image sensor but allows the visible wavelength of light to reach the image sensor. The CMOS sensor of the invention lacks such an IR cut-off filter and thus can be sensitive to infrared light. In summary, the CMOS image sensor of the digital handheld camera can be sensitive to wavelengths spanning from 350nm to 1100nm.

Even though the individual embodiments of the first aspect cover different aspects of the invention, some or all embodiments can be combined when it is useful and feasible from a technical standpoint.

According to a second aspect of the present invention, a method for acquiring a multispectral image using the illumination-induced multispectral imaging system according to the first aspect (including one embodiment or a combination of embodiments) is disclosed involving the features recited in claim 9. Further features and embodiments of the method for acquiring a multispectral image are described in the dependent claims.

The method comprises the steps of:
- placing the illumination-induced multispectral imaging system in front of and at a distance from a sample object;
- sequentially activating the LEDs of the illumination device, such that a single spectral band is emitted at a time; and
- acquiring a sequence of images of the sample object with the digital handheld camera, wherein each image is acquired during the emission of a single spectral band.

The distance can account for the distance between a front face of the sample object and a sensor plane of the digital handheld camera. Alternatively, the distance can account for the distance between a front face of the sample object and a front lens of a camera lens of the handheld camera. The distance can be kept constant over a period of time, at least as long as the sequence of images being acquired. A tripod, monopod or gimbal can be used in concert with the illumination-induced multispectral imaging system to maintain the distance.

The closely related method for acquiring a multispectral image with the use of the illumination-induced multispectral imaging system eases the workflow for multispectral image acquisition drastically without thereby sacrificing the acquisition quality.

In one embodiment, the illumination device is configured for emitting light with a defined polarization state, the digital handheld camera is provided with a polarizing filter, and the method may further comprise the step of adjusting the position, or properties of the polarization filter such as to prevent, at least partially, light having the same polarization state as the light emitted by the illumination device from entering the camera. Said step may be performed prior to or during the acquisition of the sequence of images of the sample object.

Since different spectral bands may have different polarization states, it may be useful to interrupt the sequence of acquisitions of images to adjust the polarizing filter of the digital handheld camera according to the specific polarization state of the different spectral bands, when needed.

In another embodiment of the method, the distance between the multispectral imaging system and the sample object can range from 10 cm to 1 m, preferably can range from 15 cm to 60 cm.

The multispectral imaging system as used for the method can be well adapted for analyzing small objects such as banknotes or manuscripts, typically fitting in a frame of a few tens of centimeters. Also, in the case of the acquisition of a multispectral image of large paintings, the spectral identification of pigments and authentication analysis can preferably be performed on relatively small areas or regions of interest, typically sized less than 30 cm. For such frame sizes, the typical working distance from the sample object to the lens of the digital camera of the device ranges from 10 cm to 1 m, depending on the type of the camera lens (focal length, etc.), preferably from 15 cm to 60 cm. This working distance can guarantee a maximum resolution when imaging a region of interest of the sample object and thus enabling the identification of small details which can be insightful for authentication purposes. The use of a macro camera lens in the multispectral imaging system can be beneficial for small sample objects, and the illumination device can also be fully compatible with that sort of special-use camera lens.

In another embodiment, the method can comprise the further steps of:
- performing an autofocus function of the digital handheld camera;
- extracting the information of the distance to the sample object from the digital handheld camera; and
- adapting the power of the LEDs and/or the duration of the LEDs activation according to said distance, wherein the further steps can be performed after placing the illumination-induced multispectral imaging system in front of and at a distance from a sample object and prior to sequentially activating the LEDs of the illumination device.

The luminous flux of the LEDs can be reduced by lowering the power or current supplied to the LEDs by the LED driver, as explained in one of the embodiments of the first aspect.

In another embodiment, the method can comprise the steps of:
- acquiring an image of the sample object without any illumination emitted by the illumination device; and
- removing a background illumination from the sequence of images of the sample object using the acquired image without any illumination emitted by the illumination device.

In a fourth embodiment of the second aspect of the invention, the method can comprise the step of acquiring an image of the sample object under illumination from a continuous-spectrum white light source of the illumination device.

This image can be used, as set out in one of the embodiments of the first aspect, as a reference image for post-processing in a software.

In a further embodiment, the method can comprise the additional steps of:
- acquiring a multispectral image of a reference object obtained under identical conditions as applied for the sample object; and
- correcting one or more images from the multispectral image of the sample object by normalizing pixel-wise, or region-wise, said images from the multispectral image of the sample object by the corresponding images from the multispectral image of the reference object.

A calibration acquisition can be performed on a reference object under the same conditions as the sample object. The same conditions can refer to the same working distance and relative angle between the digital handheld camera and the sample object, along with the same power (and/or or duration of activation) applied to the LEDs, same aperture of the camera lens, same exposure times and same polarisation conditions when applicable.

By "normalizing pixel-wise a sample image by a reference image", it is meant that the amplitude of the signal from each pixel of the sample image is divided by the amplitude of the signal from the corresponding pixel of the reference image. This division operation can preferably be realized after removing from both the sample image and the reference image any background illumination, which can be determined by an acquisition with no active illumination of respectively, the sample object and the reference object.

In some cases, the normalization step described above can be performed region-wise. For example, the amplitude of the signals from 4, 16 or more neighbouring pixels in the reference image can be averaged to calculate a regional normalization value. By "averaging" it is not necessarily meant to perform an arithmetic average operation. Different averaging or "smoothing" techniques, including Fourier filtering, can be implemented for this purpose. Then, in the sample image, the amplitude of the signal for each pixel of the corresponding region is divided by said regional normalization value. This procedure has the advantage of removing the influence of the microstructure of the reference object from the normalized image. Indeed, in a high-resolution image of, for example, a white screen or tissue, the micro structure of the tissue or grains of the screen will be resolved. Then, applying a pixel-wise normalization procedure to the sample image will recreate the pattern of grains or tissue structure from the reference object on the sample image, resulting in the blurring of the microstructure of the sample object. It is thus advantageous to average-off the microstructure of the reference object through a region-wise normalization procedure as described here.

A reference object can be a simple homogeneous white panel or gray chart. The objectives of performing this calibration acquisition and the subsequent normalization are the following:

On one hand, the normalization procedure allows compensating for possible inhomogeneities of the illumination field. In particular, when working at a short distance from the sample object, the light emitted by the illumination device may be sensibly stronger in the center of the imaged region or on a side, depending on the position of the illumination device and the specific LEDs which can be activated for the acquisition of each spectral band. Through the pixel (or region)-wise normalization procedure, this spatial dependency profile is removed from the corrected image.

Also, each LED or group of LEDs corresponding to the same spectral band will produce an illumination of a certain intensity which in general will not be the same for all spectral bands. The sensitivity of the camera sensor is also wavelength dependent. For these reasons, the absolute amplitude (or brightness) of each individual image of the multispectral image of the sample object cannot be compared with the absolute amplitude (or brightness) of the other images. In other words, the absolute amplitude (or brightness) of one image does not only depend on the reflectance of the sample object at that specific wavelength, but it is also determined by the illumination intensity and sensitivity of the sensor at that specific wavelength. The normalization procedure described above removes the dependency on the illumination intensity and sensitivity of the sensor for each specific wavelength, resulting thus in an image with an amplitude (or brightness) which is only representative of the reflectance of the sample object at each specific wavelength. A data set such normalized enables an easier identification of the imaged pigments from their reflectance spectra.

Even though the individual embodiments of the second aspect cover different aspects of the invention, some or all embodiments can be combined when it is useful and feasible from a technical standpoint.

According to a third aspect of the present invention, a multispectral illumination device for mounting on a digital handheld camera arranged with a camera lens is disclosed involving the features recited in claim 15.

The multispectral illumination device for mounting on a digital handheld camera arranged with a camera lens, comprises:
- a plurality of LEDs for producing polychromatic illumination for a sample object;
- a housing configured with two parts and a centrally disposed through-hole, extending from a first part to a second part of the housing, and a fixture integrally connected with the housing for attaching the housing to a camera lens, wherein the camera lens and the sample object are external to the multispectral illumination device, wherein the fixture is adapted to mount the centrally disposed through-hole in alignment with a front lens of the camera lens, wherein one of the two parts of the housing is transparent and configured to be transmissive to the polychromatic illumination of the LEDs, wherein the plurality of LEDs are arranged inside the housing in a plurality of groups, wherein each group is arranged to emit light in a mutually different spectral band.

The multispectral illumination device can be compact, in the sense that it can be small in size and lightweight. It can be easily carried by a human and can weight less than 1 kg, preferably less than 500g, most preferably less than 300g. The multispectral illumination device can be attached to and carried by a commercially available consumer digital handheld camera, whereby the dimension of the multispectral illumination device can be less than 0.1m x 0.3m x 0.3m (length x width x height).

The LEDs used can have the same electrical and/or optical properties as set out in the embodiments of the first aspect.

Mounting the centrally disposed through-hole in alignment with the front lens of the camera lens can mean that the field of view of the camera or camera lens is not obstructed by the multispectral illumination device or any part thereof, such as a housing part. The fixture can be configured as a screwable mount compatible with a camera lens thread. Alternatively, the fixture can be a pluggable mount that can be releasably fixated to the camera lens by plugging.

The transparency of the one of the two parts of the housing can relate to the physical property of the used material, which can allow light to pass through said material without an appreciable scattering of light. However, this can also include that the light passing through the material can be slightly scattered to diffuse the light when necessary. This may then be called semi-transparent. The housing can be manufactured of a plastic material, such as a thermoplastic material, as being simple and cost-effective to produce and can be lightweight in addition.
Alternatively, or in addition, the one transparent part can be foreseen with a polarizing filter, such that the light emitted by the multispectral illumination device holds a defined polarization state. The polarizing filter leads to the physical properties of the emitted light, as set out in one of the embodiments of the first aspect.

In a first embodiment of the third aspect of the invention, the multispectral illumination device can be configured to emit light in at least three different non-overlapping spectral bands, wherein a first group can be configured to emit light in the spectral band ranging from 360nm to 599nm, a second group can be configured to emit light in the spectral band ranging from 600nm to 799nm, and a third group can be configured to emit light in the spectral band ranging from 800nm to 1500nm.

Configuring the multispectral illumination device as defined in the present embodiment can be advantageous since the LEDs comprised in each group can be specifically allocated to one group, which can reduce and simplify the wiring harness or the routing on a printed circuit board required to connect the LEDs to corresponding LED drivers or other auxiliary circuits. Further advantages, such as outlined in one of the embodiments of the first aspect, correspondingly apply.

In a second embodiment of the third aspect of the invention, the groups of the multispectral illumination device can comprise LEDs configured to emit light in at least twelve mutually different spectral bands, wherein said twelve different spectral bands comprise or preferably are centered at the following twelve wavelengths: 415 nm, 435 nm, 500 nm, 550 nm, 605 nm, 630 nm, 700 nm, 770 nm, 850 nm, 880 nm, 910 nm, and 950 nm.

By selecting the spectral bands, as disclosed in the present embodiment, light with twelve different spectral bands can be emitted, which can result in the discrimination of at least 70 different reflectance spectra of a sample object and obtainable by an image sensor of a digital handheld camera. This selection provides a significant contribution to solutions known from the prior art, also with respect to accuracy. The inventors have demonstrated that a multispectral illumination device in the configuration of this embodiment allows discerning with an accuracy of at least 99.7% among a specific set of 70 standard historical pigments which have been identified and listed, together with their reflectance spectra in an open source publication for the benefit of the community of conservation scientists in https://chsopensource.org/.

### Short description of the drawings

Exemplar embodiments of the invention are disclosed in the description and illustrated by the drawings in which:
Figs.1, 2 illustrate an example of an illumination-induced multispectral imaging system according to the invention.
Figs. 3, 4 illustrate a front view of a multispectral illumination device in different variations schematically.
Fig. 5 illustrates in a side sectional view the inner structure of the multispectral illumination device.

### Examples of embodiments of the present invention

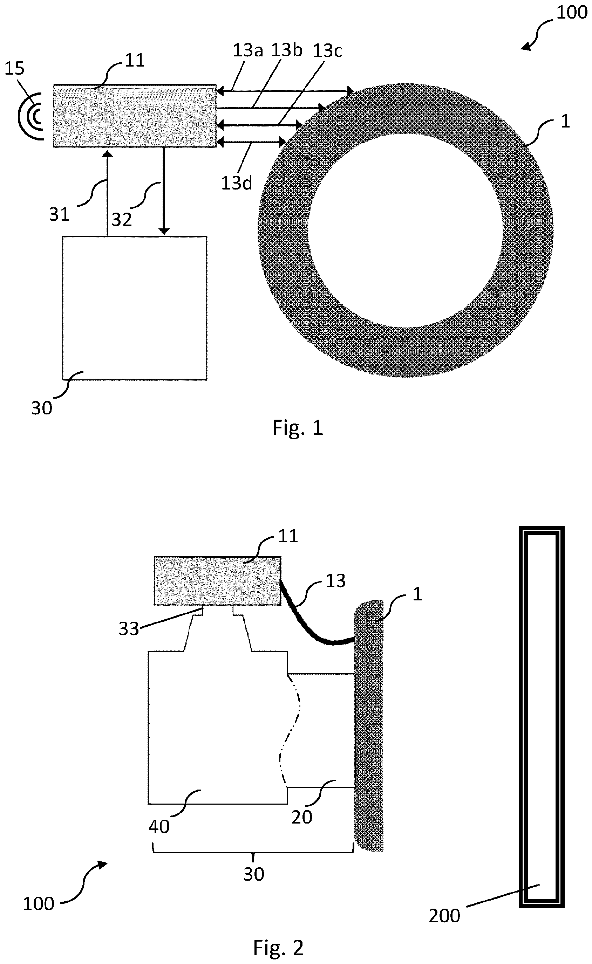

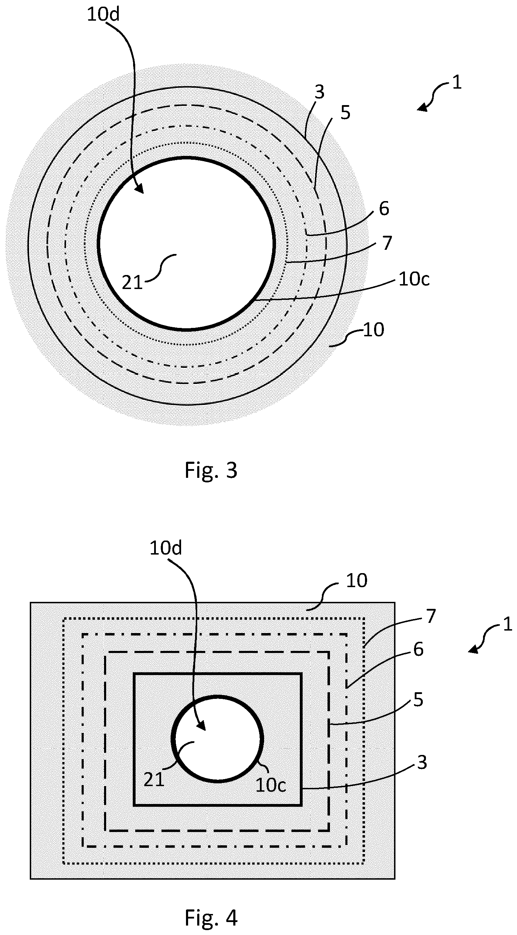

**Fig. 1** illustrates an example of an illumination-induced multispectral imaging system 100. The illumination-induced multispectral imaging system 100 comprises a digital handheld camera 30 in combination with a multispectral illumination device 1. The inner structure and the functionality of the multispectral illumination device 1 will be explained in **Figs. 3-5** in greater detail. The power-, control-, and communication unit 11 (PCCU) is attached to the hot shoe (not illustrated) of the camera body 40. The PCCU 11 receives control signals via the camera flash line 31 and the trigger line 32, for operating the multispectral illumination device 1. The control signals correspond to control signals of conventional cameras, for example, to obtain the flash readiness, a trough-the-lens flash control, an activation of an autofocus assist light, the data transmission of exposure data, and the distance (camera <-> sample object). The PCCU 11 takes benefit of these control signals and processes them accordingly.

The PCCU 11 is connected via a cable connection to the multispectral illumination device 1. The cable connection comprises a communication line 13a, which is used to send or receive illumination parameters, for example, which of the LEDs need to be powered by a control unit comprised in the multispectral illumination device 1. However, further signals or data can be exchanged between the PCCU 11 and the control unit via the said line, for example to update the program contained in the control unit.

The multispectral illumination device 1 is supplied via the power line 13b with electrical energy. The flash line 13c and the trigger line 13d correspond to the flash and trigger line 31, 32 of the digital camera and can be looped through, such that the control unit takes direct benefit of the control signals provided by the camera, as set out hereinbefore. The PCCU 11 is provided with a rechargeable battery for supplying the multispectral illumination device 1 over the power line 13b and for supplying further electronic devices comprised in the PCCU 11, such as the wireless communication device 15.

The wireless communication device 15 can be connectable to a computer system, external to the illumination-induced multispectral imaging system 100, for synchronizing and/or recording the operation of the multispectral illumination device 1 or the illumination-induced multispectral imaging system 100, respectively. In an alternative, non-illustrated example, can the function of the PCCU 11 be comprised inside the housing of the multispectral illumination device 1, wherein only one flash shoe adapter is used to route through the signals of the camera flash line 31 and trigger line 32 respectively.

**Fig. 2** illustrates a variant of the illumination-induced multispectral imaging system 100 comprising the multispectral illumination device 1 of **Fig. 3** and a digital handheld camera 30. The digital camera 30 includes a camera body 40 with a camera lens 20, attached to the camera body 40. The camera body 40 is a commercial mirrorless handheld camera body, with a CMOS image sensor.

Conventional image sensors comprise an infrared cut-off filter placed on top of the image sensors. This infrared cut-off filter has been removed to make the image sensor sensitive to the near-infrared band, typically in the wavelength between 750nm to 1000nm. In summary, the image sensor is enabled to be sensitive to wavelengths spanning from 350nm to 1100nm.

The lens 20 is a standard autofocus prime lens with a fixed focal length, whereby the multispectral illumination device 1 is screwed into the filter thread for fixation. The PCCU 11 is attached to the hot shoe 33 of the camera body 40 and configured to receive control signals from the digital handheld camera 30.

The illumination-induced multispectral imaging system 100 is used in this example to determine the material properties of a sample object or an object to be imaged. The sample object in this example is an oil painting 200 with a size of 2m x 2m. The illumination-induced multispectral imaging system 100 is held or placed with a tripod at a distance of about 0.3m from the oil painting 200 (distance front lens of the camera lens 20 to front face of oil painting 200). For imaging the entire front face of the oil painting 200, multiple pictures need to be taken as the field of view of the illumination-induced multispectral imaging system 100 accounts for 0.1m x 0.1m (in this distance range and with said camera lens). With said field of view, an appropriate resolution of the material properties can be determined.

Before the acquisition (also referred to as main acquisition) is started, a first reference image is taken with the illumination-induced multispectral imaging system 100. The illumination device 1 is activated to emit white light, and an image is taken from the scene, wherein the working distance corresponds to the working distance as explained in the paragraph before. However, the first reference image might also be acquired from a greater distance to obtain a first reference image from the entire oil painting 200.

Alternatively, or in addition, a first set of reference images is taken with exactly the same working conditions (distance, etc.) as it would be required for the main acquisition. For this sake, a homogeneous white panel is placed between the camera lens 20 and the oil painting 200. The illumination sequence of the multispectral illumination device 1 is started with the same sequence, illumination settings, autofocus settings, etc. of the digital handheld camera 30 as required for the main acquisition. Multiple images are taken and stored correspondingly in the memory of the digital handheld camera 30.

The main acquisition is started with one single press on the shutter release button of the digital handheld camera 30. The digital handheld camera sets the focus automatically. The autofocus settings of the digital handheld camera 30 provide information to the multispectral illumination device 1 concerning the distance between the illumination-induced multispectral imaging system 100 and the oil painting 200. The distance is used by the multispectral illumination device 1 to set the power and/or the illumination duration accordingly. The illumination time might also be synchronized with the shutter speed of the digital handheld camera 30.

The operation of the digital handheld camera 30 corresponds to the conventional flash burst operation of traditional digital cameras. The shutter of the camera body 40 is opened, and at the same time an LED or LEDs of a group is/are energized to emit light in a single first spectral band(s). Subsequently, the image sensor is read out, and the sensor data is stored in the digital handheld camera 30, while the shutter is closed.
In a second step, the shutter of the digital handheld camera 30 is opened and one other LED or LEDs of another group is/are energized for emitting light in a different than the single first spectral band(s). Subsequently, the image sensor is read out, and the acquired sensor data is stored in the digital handheld camera 30, corresponding to the reflectance spectrum of the reflected light by the oil painting 200. While storing the data of the second sequence, the shutter is closed.

This sequence progressively continues with all other LEDs (or groups of LEDs) comprised in the multispectral illumination device until the scene (corresponding to the field of view) was captured, whereby all LEDs comprised in the multispectral illumination device 1 were energized and consequently, all reflectance spectra of the oil painting 200 were captured by the image sensor and stored in the camera.
As outlined in one of the paragraphs herein before, it might not be necessary to energize all LEDs or group of LEDs, as it can be dependent on the sample object. If an assessment with less details concerning the reflectance spectra is required, only a few images might be taken under the illumination of a fewer amount of LEDs (or groups of LEDs). The illumination-induced multispectral imaging system 100 can be variably configurated accordingly.

The sequence of illumination with the LEDs can also be varied accordingly. Some LEDs or groups of LEDs might be excluded from illumination, particularly if the material used in the sample object is sensitive to specific wavelengths or spectral bands, and an impingement with the said wavelengths or spectral bands would lead to damage of said material.

The sensor data stored in the camera body 30 comprising the multiple acquisitions can be transferred to a data storage of a computer system for post-processing, in particular for stitching the pictures together and determining the materials or material property of the materials used. The first reference image and/or the first set of reference images can be used in the post-processing for correcting the images acquired during the main acquisition. In particular, inhomogeneities from the illumination with a single LED (or groups of LEDs) can be corrected, as illuminating the scene with a single LED might cause some inhomogeneities in the intensity across the field of view.

**Fig. 3** illustrates a front view of the multispectral illumination device 1 in a first example. In this example, the multispectral illumination device 1 comprises a housing 10 in the shape of a round disk. A through-hole 10d is noticeable in the center of the housing 10. A front lens 21 of a digital handheld camera is visible through the centered through-hole 10d. The housing 10 of the multispectral illumination device 1 is attached to the lens of the digital handheld camera with the use of the screwable fixture 10c, which is screwed into the corresponding filter mounting thread of the camera's lens. The housing 10 is made of a plastic material and will be explained in greater detail in one of the following paragraphs.

The multispectral illumination device 1 comprises multiple illumination groups in the form of illumination strips 3, 5, 6, 7. The illumination strips 3, 5, 6, 7 are arranged to circumferentially surround the centred through-hole 10d and the front lens 21, respectively. Each illumination strip 3, 5, 6, 7 comprises a plurality of LEDs. The LEDs are arranged in each strip in a string fashion, like on a string of pearls. The fourth illumination 3 strip comprises several equally configurated LEDs that can emit white visible light when energized. The wavelength ranges between 400nm and 700nm. The color temperature of the LEDs comprised in the fourth illumination strip 3 accounts for 5000K, thereby providing a colour fidelity illumination of a sample object.

The first, second, and third illumination strip 5, 6, 7 are also provided with a plurality of LED. Each strip comprises LEDs that can emit light with a different spectral band. The first illumination strip 5, only contains LEDs configured to emit light in the spectral band ranging between 360nm and 599nm. The second illumination strip 6 only contains LEDs configured to emit light in the spectral band ranging between 600nm and 799nm. The third illumination strip 7 only contains LEDs configured to emit light in the spectral band ranging between 800nm and 1500nm.
The spectral band indicate the wavelengths that can be emitted by the LEDs under illumination and referring to the full width at half maximum. It can be noticed that the different strips 5, 6, 7 are configured with LEDs that can emit light in three different, non-overlapping spectral bands, in particular when the strips are energized selectively.

In this example, the first, second, and third illumination strip 5, 6, 7 only comprise one LED for each spectral band. However, different configurations are conceivable, where two, three, or even more LEDs of a specific spectral band can be comprised in the corresponding first, second or third illumination strip 5, 6, 7. The LEDs used are low power LEDs, with a power drainage of less than 500mW each.

The following table illustrates which LEDs are used in the corresponding illumination strip:

| **Illumination strip** | **LED No.** | **Central wavelength** | **Bandwidth (FWHM)** |
|---|---|---|---|
| Fourth 3 | 1 | White visible light, 5000 K | - |
| Third 7 | 2 | 950 | 20 |
| | 3 | 910 | 20 |
| | 4 | 880 | 20 |
| | 5 | 850 | 20 |
| Second 6 | 6 | 770 | 20 |
| | 7 | 700 | 20 |
| | 8 | 630 | 20 |
| | 9 | 605 | 10 |
| First 5 | 10 | 550 | 20 |
| | 11 | 500 | 10 |
| | 12 | 435 | 10 |
| | 13 | 415 | 10 |

It can be noticed in the table that only one LED of each spectral band is comprised in one illumination strip.

The advantageous combination of the LEDs as set out in the table and in this example was obtained with the use of a trained neuronal network for finding the optimal combination. However, a comparable result can be obtained with the use of an optimization algorithm known from the prior art, such as regression. As input variables for the neuronal network (or the optimization algorithm) served a list of commercially available LEDs, including their property (central wavelength, bandwidth, etc.), a list of materials (or pigments) to be assessed or determined (including their reflectance spectra). The criterion to be optimized was to maximize the assessable materials based on a selection of commercially available LEDs.

**Fig. 4** illustrates a front view of the multispectral illumination device 1 of a second example. In this example, the multispectral illumination device 1 also comprises a housing 10, but in the shape of a rectangular disk. A through-hole 10d can be noticed in the center of the housing 10. The front lens 21 of a digital mobile phone camera is visible through the centered through-hole 10d. The housing 10 of the multispectral illumination device 1 is attached to the lens of a magnetic fixture 10c, which is fixated onto a metallic mobile phone case. The housing 10 is made of a plastic material.

The multispectral illumination device 1 in the present example also comprises multiple illumination strips 3, 5, 6, 7. The illumination strips 3, 5, 6, 7 are arranged to concentrically surround the centered through-hole 10d and the front lens 21 in a rectangular fashion. The illumination strips are equally configured as explained in the example of **Fig. 3****.** However, it can be noticed that the fourth illumination strip 3 is arranged to be the closest to the centered trough-hole 10d, wherein the third illumination strip 7 is arranged on the outermost edge.

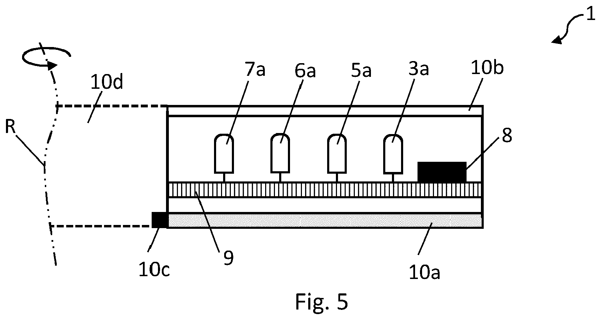

**Fig. 5** illustrates schematically in a side sectional view the inner structure of the multispectral illumination device 1 of the first example illustrated in **Fig. 3****.** For the sake of simplicity, only one section is illustrated, whereby the line on the left corresponds to the axis of rotation R.

The housing of the multispectral illumination device 1 comprises the housing lower part 10a and the housing upper part 10b, and two not referenced side walls illustrated with solid lines running from the lower to the upper part of the housing. Both housing parts 10a, 10b are made of a plastic material, whereby the housing upper part 10b is made of a transparent polycarbonate which is transmissive to the light emitted by the LEDs when energized.

Alternatively, the housing upper part 10b can only be transmissive to specific wavelength (or band of wavelengths) of the LEDs when energized. For instance, the housing upper part 10b can only be transmissive to the wavelengths emitted by the third illumination strip. This can be advantageous if fewer material properties of the sample object need to be assessed only or if light with a specific wavelengths need to be prevented from getting into contact with the surface of the sample object. This can be achieved e.g. and in a non-limiting way by preventing the activation of LEDs having undesider wavelengths.

In an alternative, non-illustrated example, the housing upper part 10b can be embodied with a plurality diffuser prisms suitable for dispersing the light when emitted by the LEDs. The housing upper part 10b can be configured to be detachable, such that the housing upper part 10b can be reconfigured when necessary (different transmission characteristics or diffuser prisms).

In an further, non-illustrated example, the housing upper part 10b can be configured to change the polarization state of the light emitted by LEDs, such that the light leaving the multispectral illumination device 1 is linearly polarized or circularly polarized. This can be achieved with a polarizing filter atop (e.g. outward surface) of the housing upper part 10b. When a multispectral illumination device 1 with this feature is used in the illumination-induced multispectral imaging system of **Fig. 1****,** a corresponding polarized filter might be used on the camera lens to block reflected light having the same polarization state as the reflected light from the sample object. Said polarized filter thus prevents light from entering the camera lens (at least partially), having the same polarization state as the light emitted by the multispectral illumination device 1.

A plurality of LEDs 7a, 6a, 5a, 3a, a printed circuit board 9 (PCB) and a control unit 8 are arranged inside the housing and sandwiched between the housing upper and lower part 10a, 10b. The first LED 7a in the innermost corresponds to one LED of the third illumination strip, wherein the fourth LED 3a on the outermost corresponds one LED of the fourth illumination strip. The LEDs 7a, 6a, 5a, 3a and the control unit 8 are placed on and supported by the PCB 9. The control unit 8 is connected via the PCB to the LEDs 7a, 6a, 5a, 3a such that each LED can be individually controlled. However, the fourth LED 3a of the fourth illumination group can share a common supply bus on the PCB, such that the control unit 8 only needs to supply the common supply bus with electrical energy for energizing all LEDs of the fourth illumination group at once. The control unit 8 is configured as a programmable microcontroller and comprises a plurality of LED drivers to energize the said LEDs 7a, 6a, 5a, 3a.

The multispectral illumination device 1 of **Fig. 5** also comprises the through-hole 10d which is illustrated on the left. The trough hole is configured as a void space, such that the field of view of the camera lens is not obstructed by any structural part of the housing. The fixture 10a for attaching the housing of the multispectral illumination device 1 to a camera lens, in this example, is located inside the through-hole 10d and integrally with the housing lower part 10a.

### Reference symbols in the figures

- 1: Multispectral illumination device, illumination device
- 3: Fourth group, fourth illumination strip
- 5: First group, first illumination strip
- 6: Second group, second illumination strip
- 7: Third group, third illumination strip
- 3a-7a: LEDs of the illumination strips or groups
- 8: Control unit
- 9: Printed circuit board
- 10: Housing
- 10a: Housing lower part
- 10b: Housing upper part / lid, diffuser
- 10c: Fixture
- 10d: Through-hole
- 11: Power-, control-, and communication unit, PCCU
- 13: Cable connection
- 13a: Communication line
- 13b: Power line
- 13c: Flash line
- 13d: Trigger line
- 15: Wireless communication device
- 20: Camera lens
- 21: Front lens
- 30: Digital handheld camera
- 31: Camera flash line
- 32: Camera trigger line
- 33: Hot shoe
- 40: Camera body
- 100: Imaging system
- 200: Oil painting, object to be imagined, sample object
- R: Rotation axis

## Claims

1. Illumination-induced multispectral imaging system (100) comprising:
- a digital handheld camera (30);
- an illumination device (1), integrated to or mountable on the digital handheld camera (30), the illumination device (1) comprising a plurality of LEDs (3a, 5a, 6a, 7a) for illuminating a sample object (200), wherein each LED of the plurality of LEDs (3a, 5a, 6a, 7a) is configured to emit light within a single spectral band, said single spectral band being **characterized by** a central wavelength comprised between 400 nm and 1500 nm, wherein said plurality of LEDs is arranged to emit light in at least two different non-overlapping spectral bands;
- a control unit (8) configured to sequentially activate the LEDs (3a, 5a, 6a, 7a) of the at least two different non-overlapping spectral bands, such that only one spectral band is emitted at a time, wherein the control unit (8) is further adapted to sequentially activate the LEDs (3a, 5a, 6a, 7a) of the at least two different non-overlapping spectral bands during a sequence of image acquisitions by the digital handheld camera (30), wherein the acquisition of each image is synchronized with the sequential activation of the LEDs (3a, 5a, 6a, 7a) of the at least two different non-overlapping spectral bands, such that each image is acquired by the digital handheld camera (30) during an emission period of only one spectral band.

2. The illumination-induced multispectral imaging system (100) of claim 1, wherein the spectral bands emitted by the LEDs (3a, 5a, 6a, 7a) are **characterized by** a bandwidth narrower than 30 nm, preferably equal or narrower than 20 nm.

3. The illumination-induced multispectral imaging system (100) of one of claims 1 or 2, wherein the illumination device (1) is configured for emitting light with a defined polarization state, and wherein the digital handheld camera (30) is provided with a polarizing filter, wherein the polarizing filter is adapted for preventing, at least partially, light having the same polarization state as the light emitted by the illumination device (1), from entering the camera lens (20).

4. The illumination-induced multispectral imaging system (100) of claim 3, wherein the polarization state of the light emitted by the illumination device (1) is linearly polarized or circularly polarized light.

5. The illumination-induced multispectral imaging system (100) of any one of the claims 1 to 4, wherein the LEDs (3a, 5a, 6a, 7a) of the illumination device (1) are configured to emit light in at least twelve mutually different spectral bands, wherein said twelve mutually different spectral bands comprise or preferably are centered at the following twelve wavelengths: 415 nm, 435 nm, 500 nm, 550 nm, 605 nm, 630 nm, 700 nm, 770 nm, 850 nm, 880 nm, 910 nm, and 950 nm.

6. The illumination-induced multispectral imaging system (100) of any one of the claims 1 to 5, wherein each LED of the plurality of LEDs (3a, 5a, 6a, 7a) of the illumination device (1) is provided having a power drainage of less than 500 mW, and/or wherein the control unit (8) is configured to activate the LEDs (3a, 5a, 6a, 7a) of the at least two different non-overlapping spectral bands, for a time period of less than 500 milliseconds.

7. The illumination-induced multispectral imaging system (100) of any one of the claims 1 to 6, wherein the illumination device (1) further comprises a continuous-spectrum white light source, wherein the continuous-spectrum white light source preferably comprises one or more continuous-spectrum LEDs configured to emit white light.

8. The illumination-induced multispectral imaging system (100) of any one of the claims 1 to 7, wherein the illumination device (1) further comprises: a housing (10) configured with two parts (10a, 10b) and a centrally disposed through-hole (10d), extending from a first part (10a) to a second part (10b) of the housing (10), and a fixture (10c) integrally connected with the housing (10) for attaching the housing (10) to a lens (20) of the digital handheld camera (30), the fixture (10c) being adapted to mount the centrally disposed through-hole (10d) in alignment with said lens (20), wherein one of the two parts (10a, 10b) of the housing (10) is transparent and configured to be transmissive to the illumination of the LEDs (3a, 5a, 6a, 7a), wherein the LEDs (3a, 5a, 6a, 7a) are arranged inside the housing (10) in groups (3, 5, 6, 7), wherein each group (3, 5, 6, 7) is arranged to emit light in a mutually different spectral band.

9. Method for the acquisition of a multispectral image using an illumination-induced multispectral imaging system (100) of any one of the claims 1 to 8, comprising the steps of:
- placing the illumination-induced multispectral imaging system (100) in front of and at a distance from a sample object (200);
- sequentially activating the LEDs (3a, 5a, 6a, 7a) of the illumination device (1), such that a single spectral band is emitted at a time; and
- acquiring a sequence of images of the sample object (200) with the digital handheld camera (30), wherein each image is acquired during the emission of one single spectral band.

10. The method of claim 9, wherein the illumination device (1) is configured for emitting light with a defined polarization state, and wherein the digital handheld camera (30) is provided with a polarizing filter; the method further comprising the step of adjusting the position or properties of said polarizing filter such as to prevent, at least partially, light having the same polarization state as the light emitted by the illumination device from entering the camera, said step being performed prior to or during the acquisition of the sequence of images of the sample object (200).

11. The method of claims 9 or 10, comprising the further steps of:
- performing an autofocus function of the digital handheld camera (30);
- extracting the information of the distance to the sample object (200) from the digital handheld camera (30); and
- adapting the power of the LEDs and/or the duration of the LEDs activation according to said distance, said further steps being performed after placing the illumination-induced multispectral imaging system (100) in front of and at a distance from a sample object (200) and prior to sequentially activating the LEDs (3a, 5a, 6a, 7a) of the illumination device (1).

12. The method of any one of the claims 9 to 11, further comprising the steps of:
- acquiring an image of the sample object (200) without any illumination emitted by the illumination device; and
- removing a background illumination from the sequence of images of the sample object (200) using said image acquired without any illumination emitted by the illumination device (1).

13. The method of any one of the claims 9 to 12, further comprising the step of acquiring an image of the sample object (200) under illumination from a continuous-spectrum white light source of the illumination device (1).

14. The method of any one of the claims 9 to 13, comprising the additional steps of:
- acquiring a multispectral image of a reference object obtained under identical conditions as applied for the sample object (200);
- correcting one or more images from the multispectral image of the sample object (200) by normalizing pixel-wise, or region-wise, said images from the multispectral image of the sample object (200) by the corresponding images from the multispectral image of the reference object.

15. Multispectral illumination device (1) for mounting on a digital handheld camera (30) arranged with a camera lens (20), the multispectral illumination device (1) comprising:
- a plurality of LEDs (3a, 5a, 6a, 7a) for producing polychromatic illumination for a sample object (200);
- a housing (10) configured with two parts (10a, 10b) and a centrally disposed through-hole (10d), extending from a first part (10a) to a second part (10b) of the housing (10), and a fixture (10c) integrally connected with the housing (10) for attaching the housing (10) to a camera lens (20), wherein the camera lens (20) and the sample object (200) are external to the multispectral illumination device (1), wherein the fixture (10c) is adapted to mount the centrally disposed through-hole (10d) in alignment with a front lens (21) of the camera lens (20), wherein one of the two parts (10a, 10b) of the housing (10) is transparent and configured to be transmissive to the polychromatic illumination of the LEDs (3a, 5a, 6a, 7a), wherein the plurality of LEDs (3a, 5a, 6a, 7a) is arranged inside the housing (10) in a plurality of groups (3, 5, 6, 7), wherein each group (3, 5, 6, 7) is arranged to emit light in a mutually different spectral band.

16. The multispectral illumination device (1) of claim 15, wherein the groups (3, 5, 6, 7) comprise LEDs (3a, 5a, 6a, 7a) configured to emit light in at least twelve different spectral bands, wherein said twelve mutually different spectral bands comprise or preferably are centered at the following twelve wavelengths: 415 nm, 435 nm, 500 nm, 550 nm, 605 nm, 630 nm, 700 nm, 770 nm, 850 nm, 880 nm, 910 nm, and 950 nm.
